Europäisches Patentamt

European Patent Office

Office européen des brevets

(11) Veröffentlichungsnummer : **0 141 930**
**B1**

(12) **EUROPÄISCHE PATENTSCHRIFT**

(45) Veröffentlichungstag der Patentschrift :
**11.01.89**

(21) Anmeldenummer : **84109641.5**

(22) Anmeldetag : **13.08.84**

(51) Int. Cl.⁴ : **F 04 B 11/00**, F 04 B 13/00,
F 04 B 13/02, G 05 D 11/02

(54) Verfahren und Vorrichtung zum Dosieren von mindestens einem viskosen Stoff.

(30) Priorität : **12.08.83 DE 3329296**
**24.04.84 DE 3415253**

(43) Veröffentlichungstag der Anmeldung :
**22.05.85 Patentblatt 85/21**

(45) Bekanntmachung des Hinweises auf die Patenterteilung : **11.01.89 Patentblatt 89/02**

(84) Benannte Vertragsstaaten :
**BE DE FR GB IT**

(56) Entgegenhaltungen :
FR—A— 2 424 070
GB—A— 617 286
GB—A— 2 020 356
US—A— 3 597 113

(73) Patentinhaber : **Reinhardt-Technik GmbH & Co.**
**Waldheimstrasse 3**
**D-5883 Kierspe 1 (DE)**

(72) Erfinder : **Lückhoff, Peter**
**Am Nocken 49**
**D-5883 Kierspe (DE)**
Erfinder : **Holger, Adolf**
**Am Nocken 59**
**D-5883 Kierspe (DE)**
Erfinder : **Fischer, Klaus-Peter**
**Geichtstrasse 12**
**D-5882 Meinerzhagen (DE)**
Erfinder : **Johannesknecht, Bernd**
**Am Hang**
**D-5883 Kierspe (DE)**
Erfinder : **Furmanek, Richard**
**Am Ahornweg 36**
**D-5883 Kierspe (DE)**
Erfinder : **Heiligenhaus, Friedrich-Karl**
**Dörscheiweg**
**D-5883 Kierspe (DE)**
Erfinder : **Rohde, Hans J.**
**Ginster Weg 1**
**D-5882 Meinerzhagen (DE)**

(74) Vertreter : **Schiller, Walter, Dr.**
**Kanzlei Münich & Schiller Willibaldstrasse 36**
**D-8000 München 21 (DE)**

**Beschreibung**

Die Erfindung bezieht sich auf ein Verfahren und eine Vorrichtung zum Dosieren von mindestens einem viskosen Stoff und insbesondere von Zwei-Komponenten-Kunstoffen, bei denen der Stoff mit Hilfe von zwei an mindestens eine Zuführpumpe angeschlossenen Auspreßeinheiten einer Abgabevorrichtung zugeführt wird.

Es ist bekannt, viskose Stoffe, wie Ein- oder Mehrkomponenten-Kunststoffe, die z. B. als Lack zum Beschichten von Gegenständen dienen, einer Abgabevorrichtung, z. B. einer Spritzdüse, mittels zwei aufeinanderfolgend betätigbaren Auspreßeinheiten zuzuführen, die wechselweise mittels einer Pumpe mit dem viskosen Stoff gefüllt werden. Beim aufeinanderfolgenden Tätigwerden dieser Auspreßeinheiten tritt jedoch im Umschaltpunkt, d. h. zu demjenigen Zeitpunkt, an dem der Auspreßvorgang der einen Auspreßeinheit endet und derjenige der anderen Auspreßeinheit beginnt, ein Druckverlust ein, der zu Dosierfehlern führen kann. Man hat versucht, diesen Nachteil durch längere Mischstrecken und andere Anordnungen zu kompensieren, um eine stets gleichmäßige Dosierung zu erreichen. Diese Maßnahmen mögen in Fällen ausreichen, in denen es auf die Qualität der Beschichtung nicht in dem Maße ankommt, wie z. B. bei Korrosionsschutzbeschichtungen. Wenn es aber auf die dekorative Wirkung bzw. die Qualität der Beschichtung, wie z. B. bei Lackierungen, in hohem Maße ankommt, bei denen auch die verwendeten Stoffe empfindlicher handzuhaben sind, insbesondere wenn schnellere Aushärtzeiten gefordert werden, dann sind diese bekannten Maßnahmen zur Kompensation der durch den Umschaltpunkt der Auspreßeinheiten bedingten Dosierfehler nicht mehr ausreichend.

Der Erfindung liegt deshalb die Aufgabe zugrunde, ein Verfahren gemäß dem Oberbegriff des Patentanspruchs 1 zum Dosieren von viskosen Stoffen bzw. eine Vorrichtung zur Durchführung des Verfahrens derart weiterzubilden, daß auch an den Umschaltpunkten der Auspreßeinheiten eine genaue Dosierung des viskosen Stoffes erreicht wird, so daß auch bei kurzen Mischzeiten im Taktverfahren Werkstücke ungeachtet der Umschaltpunkte der Auspreßeinheiten stets gleichmäßig beschichtet werden können.

Diese Aufgabe wird erfindungsgemäß durch die im kennzeichnenden Teil des Patentanspruchs 1 angegebenen Merkmale gelöst.

Die Erfindung löst diese Aufgabe durch die Überlagerung des Endes eines Auspreßvorgangs jeweils einer der beiden Auspreßeinheiten durch den Auspreßvorgang der jeweils anderen Auspreßeinheit, wobei der Druck in der jeweils anderen Auspreßeinheit dem Druck in der einen der beiden Auspreßeinheiten angeglichen wird.

Durch die Überlagerung der Auspreßvorgänge beider Auspreßeinheiten bei vorhergehender Druckangleichung der jeweils den Auspreßvorgang der ersten Auspreßeinheit überlagernden zweiten Auspreßeinheit läßt sich eine stets gleichmäßige Dosierung des auszupressenden viskosen Stoffes erreichen, so daß Ein- oder Mehrkomponenten-Kunststoffe verarbeitende Maschinen für sämtliche Einsatzzwecke, wie Spritzen oder Gießen, verwendet werden können, bei denen dosiert werden muß, insbesondere in der Autolackiererei und in der Möbelindustrie.

So ist es möglich, lösungsmittelfreie Zweikomponenten-Lacke z. B. für Autoteile an schnelllaufenden Fließbändern zu verwenden bzw. Werkstücke mit Zweikomponenten-Lack im Taktverfahren elektrostatisch zu beschichten. Ebenso können Werkstücke gespritzt, verklebt oder versiegelt werden. Die Taktzeit reicht aus, um das System zu füllen und einen neuen Arbeitszyklus zu beginnen.

Vorrichtungen zur Durchführung des Verfahrens sind in den Ansprüchen 2 folgende gekennzeichnet.

Die Vorrichtung zum Durchführen des Verfahrens gemäß der Erfindung besteht in an sich bekannter Weise aus zwei Auspreßeinheiten für mindestens einen viskosen Stoff, die über mit Absperrventilen ausgerüstete Zuführleitung an mindestens eine Zuführpumpe für den jeweiligen viskosen Stoff sowie über mit Absperrventilen ausgerüstete Auspreßleitungen an eine Abgabevorrichtung angeschlossen sind.

Erfindungsgemäß weist die Vorrichtung eine Druckangleicheinheit auf, die den Druck in den beiden Auspreßeinheiten auf einen gleichen Wert einstellt und das Ende des Auspreßvorgangs der einen Auspreßeinheit durch den Auspreßvorgang der jeweils anderen Auspreßeinheit überlagert.

Diese Druckangleicheinheit kann insbesondere dann, wenn der Druck in den Auspreßleitungen kleiner als 10 bar ist, beispielsweise aus einer Steuereinheit für den Förderdruck der Zuführpumpen bestehen ; z. B. durch eine Drehzahlsteuerung wird der mittlere Förderdruck der Zuführpumpe derart geregelt oder gesteuert, daß der Druck in den Zuführleitungen gleich dem gewünschten Arbeitsdruck bzw. dem Auspreßdruck ist (Anspruch 3).

Natürlich ist es möglich, den oder die viskosen Stoffe mit einem höheren Druck als dem Abgabedruck der Auspreßeinheiten zuzuführen und nach Beendigung des Füllens der jeweiligen Auspreßeinheit den Druck beispielsweise über ein Überdruckventil abzusenken (Anspruch 4).

Die in den Ansprüchen 3 und 4 gekennzeichneten Ausbildungen der Druckangleicheinheit sind insbesondere für Auspreßdrücke bis 10 bar, d. h. für vergleichsweise niedrige Auspreßdrücke geeignet, da für diesen Druckbereich billige und zuverlässige Zuführpumpen zur Verfügung stehen.

Eine Ausbildung der Druckanpaßeinheit für höhere Arbeitsdrücke, d. h. für Arbeitsdrücke bis zu mehreren 100 bar ist gemäß Anspruch 5 dadurch gekennzeichnet, daß die Druckangleicheinheit mindestens eine Druckerhöhungseinheit aufweist, an die die Auspreßleitungen der beiden Auspreßeinheiten zusätzlich über je eine Abzweigleitung angeschlossen sind, daß sowohl in die Abzweigleitungen als auch in die Auspreßleitungen Absperrventile geschaltet sind, die in Abhängigkeit von der Hubstellung der Auspreßkolben in den Auspreßeinheiten derart steuerbar sind, daß während des Auspreßvorgangs einer der beiden Auspreßeinheiten und nach dem Füllen der anderen Auspreßeinheit die Druckerhöhungseinheit mit Druckmitteldruck im Sinne einer Angleichung des Materialdrucks des in der anderen Auspreßeinheit strömenden Materials beaufschlagbar ist, und anschließend die andere Auspreßeinheit zur ersten Auspreßeinheit zuschaltbar ist. Diese Vorrichtung ermöglicht einerseits ein genaues kontinuierliches Dosieren eines unter Druck abzugebenden viskosen Stoffes, andererseits aber die Einhaltung äußerst kurzer Taktzeiten ohne Beeinträchtigung der Dosierqualität. Der Einsatz von Ein- oder Mehrkomponenten-Kunststoffen, insbesondere von Lacken, zur taktweisen Beschichtung von Werkstücken, z. B. in der Automobil- und Möbelindustrie, ist damit möglich.

Die Zuverlässigkeit und Genauigkeit der Vorrichtung sowohl gemäß den Ansprüchen 3 und 4 als auch gemäß Anspruch 7 wird durch Endschalter weiter erhöht, die gemäß den Ansprüchen 5,6 und 8 bis 11 den einzelnen Auspreßeinheiten zugeordnet sind, und von denen ein Endschalter nach vollständiger Füllung der zugeordneten Auspreßeinheit durch deren Auspreßkolben im Sinne der Druckmittelbeaufschlagung der Druckerhöhungseinheit zur Angleichung des Drucks der gefüllten Auspreßeinheit an den Druck der auspressenden Auspreßeinheit anfahrbar ist.

Durch den in Anspruch 5 gekennzeichneten Endschalter wird sichergestellt, daß in einer bestimmten Arbeitshubstellung des Auspreßkolbens jeweils einer der beiden Auspreßeinheiten ein Endschalter anfahrbar ist, der das Öffnen eines in die Auspreßleitung der anderen Auspreßeinheit geschalteten Ventils sowie die gleichzeitige Betätigung dieser anderen Auspreßeinheit im Auspreßsinne bewirkt.

Die zeitabhängige Steuerbarkeit der in die Auspreßleitungen zwischen den Auspreßeinheiten und der Druckerhöhungseinheit geschalteten Ventile im Schließsinn desjenigen Ventils, welches in die von der nachträglich zugeschalteten Auspreßeinheit zur Druckerhöhungseinheit führende Leitung geschaltet ist, gewährleistet insbesondere ein einwandfreies und sicheres Umschalten von einer Auspreßeinheit auf die andere unter Sicherung der Funktion der Druckerhöhungseinheit.

Mit dem weiteren Endschalter jeder Auspreßeinheit gemäß Anspruch 6 wird das Verschließen der Auspreßleitung sichergestellt, die mit der jeweils entleerten Auspreßeinheit verbunden ist.

Im vorstehenden Sinne ist auch die zeitabhängige Steuerung der Druckbeaufschlagung der Druckerhöhungseinheit sowie die Abschaltung jeweils einer der beiden Auspreßeinheiten sinnvoll, da diese Steuervorgänge Voraussetzung sind für die Herstellung der Verbindung der Druckerhöungseinheit mit der jeweils entleerten Auspreßeinheit, damit beide Einheiten anschließend mit viskosem Stoff gefüllt werden können.

Anspruch 12 betrifft eine besonders vorteilhafte Ausführungsform der erfindungsgemäßen Vorrichtung für Zweikomponenten-Kunststoffe, da sie eine genaue Dosierung beider Komponenten sicherstellt und damit die Verwendung z. B. von lösungsmittelfreien Zweikomponenten-Lacken für Autoteile oder die elektrostatische Beschichtung von Werkstücken mit Zweikomponenten-Lacken im Taktverfahren auch bei sehr niedrigen Mischungstoleranzen und stark verkürzten Mischzeiten ermöglicht.

Die Erfindung wird nachstehend anhand von Ausführungsbeispielen unter Bezugnahme auf die Zeichnung näher beschrieben, in der zeigen :

Fig. 1 ein Materialschema eines ersten Ausführungsbeispiels einer Vorrichtung zum Dosieren von Zweikomponenten-Kunststoffen,

Fig. 2 ein Materialschema eines zweiten Ausführungsbeispiels einer Vorrichtungzum Dosieren von Zweikomponenten-Kunststoffen,

Fig. 3 eine Ausführungsform der Vorrichtung in Seitenansicht, und

Fig. 4 die Vorrichtung gemäß Fig. 3 in Vorderansicht.

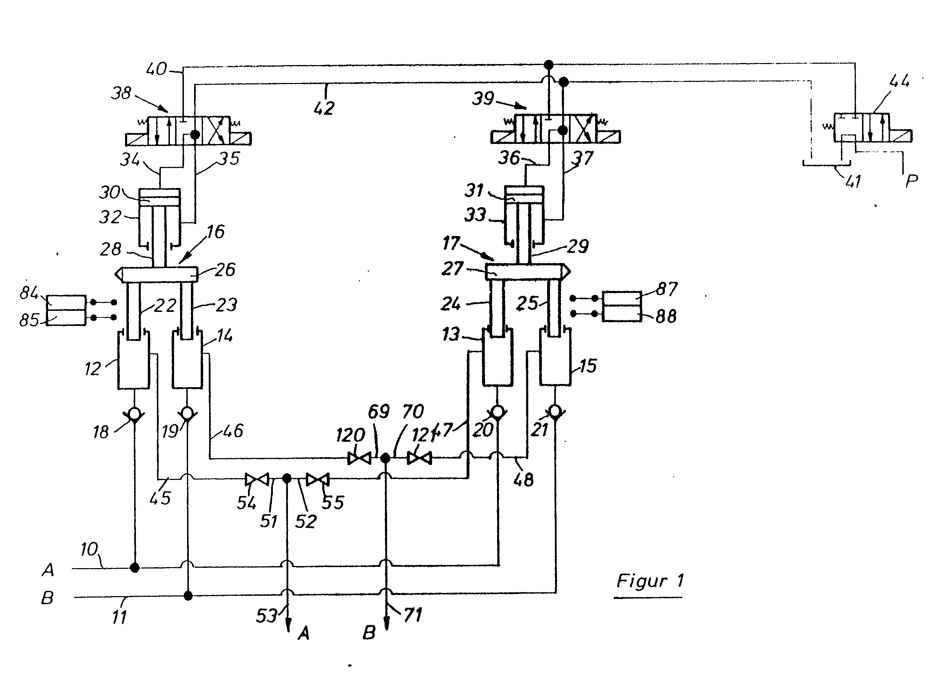

In Fig. 1 sind mit den Bezugszeichen 10 und 11 Zuführleitungen für die Basiskomponente A und den Härter B eines Zweikomponenten-Kunststoffes bezeichnet, die nicht dargestellte Druckpumpen, beispielsweise Kolbenpumpen, mit jeweils einem Paar Auspreßzylindern 12, 13 bzw. 14, 15 zweier Auspreßeinheiten 16 bzw. 17 verbinden. In die zu diesen Auspreßzylindern führenden Leitungen ist jeweils ein Rückschlagventil 18, 19, 20 bzw. 21 geschaltet. Den einzelnen Auspreßzylindern sind jeweils Auspreßkolben 22, 23, 24 bzw. 25 zugeordnet. Die äußeren Enden der beiden Auspreßkolben 22, 23 der Auspreßeinheit 16 sind an einem Auspreßbalken 26 befestigt, während die Auspreßkolben 24, 25 der Auspreßeinheit 17 mit einem Auspreßbalken 27 fest verbunden sind. Die Auspreßbalken 26 und 27 der beiden Auspreßeinheiten sind an dem äußeren Ende einer Kolbenstange 28 bzw. 29 befestigt, deren Kolben 30 bzw. 31 in je einem Druckmittelzylinder 32 bzw. 33 verschiebbar gelagert sind. Je eine Leitung 24, 35 bzw. 36, 37 ist an je ein Ende der beiden Druckmittelzylinder 32, 33 angeschlossen, wobei die Zylinderseiten der beiden Druckmittelzylinder über je ein elektromagnetisches Mehrwegeventil 38 bzw. 39 an eine Druckleitung 40, oder an eine zu einem Druckmittelbehälter 41 führende Rückflußleitung 42 angeschlossen werden können. In die von der Druckmittelquelle P gespeiste Druckleitung 40 ist ein Drei-Zwei-Wegeventil 44 geschaltet, in dessen Ruhestellung Druckmittel direkt von der Pumpe über das Ventil in den Druckmittelbehälter 41 fließt. Wenn Druck benötigt wird, also entweder das Ventil 38 oder 39 anzieht, zieht auch das Ventil 44 mit an.

Die Auspreßzylinder 12, 14 bzw. 13, 15 sind jeweils an Auspreßleitungen 45, 46, 47, 48 angeschlossen. Dabei stehen die Auspreßzylinder 12, 13 der beiden Auspreßeinheiten 16, 17 über die Auspreßleitungen 45, 47 und sich daran anschließende Auspreßleitungen 51, 52 mit einer gemeinsamen Abgabeleitung 53 für die Stoffkomponente A des Zweikomponenten-Kunststoffes in Verbindung. In die Auspreßleitungen 51 bzw. 52 sind jeweils automatisch betätigbare Absperrventile 54, 55 geschaltet.

Der Auspreßzylinder 14 der Auspreßeinheit 16 sowie der Auspreßzylinder 15 der Auspreßeinheit 17, die jeweils mit dem Härter B des Zweikomponenten-Kunststoffs gefüllt werden können, stehen über die Auspreßleitungen 46 und 48 und Auspreßleitungen 69, 70 mit einer gemeinsamen Abgabeleitung 71 für den Härter B in Verbindung. In die Auspreßleitungen 69, 70 sind automatisch betätigbare Absperrventile 120, 121 geschaltet.

Jedem Auspreßbalken 26 bzw. 27 sind jeweils zwei Endschalter 84, 85 bzw. 87, 88 zugeordnet, die in Abhängigkeit von der Stellung der Auspreßbalken 26, 27 Steuervorgänge der Einrichtung, insbesondere die Betätigung der beschriebenen Ventile, auslösen.

Im folgenden wird die Wirkungsweise der Vorrichtung gemäß Fig.1 beschrieben :

Bei Inbetriebnahme der Vorrichtung gemäß Fig. 1 werden die beiden Auspreßeinheiten 16 und 17 durch die mit den nichtdargestellten Kolbenpumpen verbundenen Zuführleitungen 10, 11 gefüllt, die Auspreßzylinder 12 und 13 der beiden Auspreßeinheiten jeweils mit der Basiskomponente A und die Auspreßzylinder 14 und 15 über die Leitung 11 mit dem Härter B des Zweikomponenten-Kunststoffs. Dabei befindet sich das Mehrwegeventil 38 in der in Fig. 1 dargestellten Stellung, in der das Druckmittel aus dem Druckmittelzylinder 32 über die Leitungen 34 und 42 in den Behälter 41 zurückfließen konnte. Der Kolben 31 wird beim Füllen der Auspreßzylinder 13 und 15 zurückgefahren, wobei infolge der Stellung des Mehrwegeventils 39 aus der Zylinderseite des Druckmittelzylinders 33 das Druckmittel ebenfalls über die Rückflußleitung 42 in den Druckmittelbehälter 41 entweichen kann.

Anschließend wird das elektromagnetische Mehrwegeventil 38 umgeschaltet, so daß die Druckleitung 40 über die Leitung 34 mit der Zylinderseite des Druckmittelzylinders 32 verbunden und dessen Kolben 30 im Auspressinne der Auspreßkolben 22, 23 in Fig. 1 nach unten bewegt wird. Gleichzeitig mit der Umschaltung des Mehrwegeventils 38 werden die automatischen Ventile 54 und 120 geöffnet, so daß die Basiskomponente A aus dem Auspreßzylinder 12 über die Leitungen 45, 51 in die Abgabeleitung 53 strömen kann. Zur selben Zeit drückt der Auspreßkolben 22 aus dem Auspreßzylinder 14 den Härter B durch den Leitungen 46 und 69 in die Abgabeleitung 71. Die Abgabeleitungen 52 und 71 führen zu einer ansich bekannten und daher nicht dargestellten Mischvorrichtung, von der aus der Zweikomponenten-Kunststoff einer Abgabevorrichtung, z. B. einer Düse oder Sprühvorrichtung zugeführt wird.

Während des Auspreßvorgangs der Auspreßkolben 22, 23 der Auspreßeinheit 16 fährt der zugehörige Auspreßbalken 26 den Endschalter 84 an. Hierdurch werden die automatischen Absperrventile 55 in der Leitung 52 sowie 121 in der Leitung 70 geöffnet. Etwa gleichzeitig wird das Mehrwegeventil 39 umgeschaltet so daß die Druckleitung 40 über die Leitung 36 die Zylinderseite des Druckmittelzylinders 32 mit Druck beaufschlagt und den Kolben 31 zusammen mit dem Auspreßbalken 27 und den Auspreßkolben 24, 25 abwärts treibt. Dadurch kann die Basiskomponente A aus dem Auspreßzylinder 13 durch die Leitungen 47 und 52 in die Abgabeleitung 53 für die Basiskomponente A ausgepreßt werden, während der Härter B aus dem Auspreßzylinder 15 durch die Leitungen 48 und 70 in die Abgabeleitung 71 für den Härter B gepreßt wird.

Bei der weiteren Fortsetzung des Auspreßhubes der Auspreßeinheit 16 fährt deren Auspreßbalken 26 den Endschalter 85 an, der das Schließen der automatischen Absperrventile 54, 120 in den Leitungen 51 bzw. 69 bewirkt. Die Auspreßeinheit 16 wird durch Betätigung des Mehrwegeventils 38 abgeschaltet.

Während des Auspreßvorgangs der Auspreßeinheit 17 werden die Auspreßzylinder 12 und 14 der Auspreßeinheit 16, wie erwähnt, mit den Komponenten A und B gefüllt, bis der Auspreßzylinder 12 und 15 in der oberen Totpunktstellung der Auspreßkolben 22, 23 vollständig gefüllt ist.

Beim weiteren Auspreßvorgang der Auspreßeinheit 17 betätigt deren Auspreßbalken 27 den Endschalter 87, durch den die automatischen Absperrventile 45 und 120 geöffnet werden. Durch ein gleichzeitiges Umschalten des Mehrwegeventils 38 beginnt die Auspreßeinheit 16 mit dem Auspressen.

Am Ende des Auspreßhubes der Auspreßeinheit 17 fährt deren Auspreßbalken 27 den Endschalter 88 an, durch den die automatischen Absperrventile 55 und 121 in den Leitungen 52 und 70 geschlossen werden.

Nach dem Abschalten der Auspreßeinheit 17 beaufschlagen die Zuführpumpen über die Zuführleitungen 10 und 11 die Auspreßzylinder 13 bzw. 15 mit den Komponenten A bzw. B, um diese vollständig zu füllen.

An dieser Stelle wiederholt sich der Arbeitszyklus wie vorstehend beschrieben.

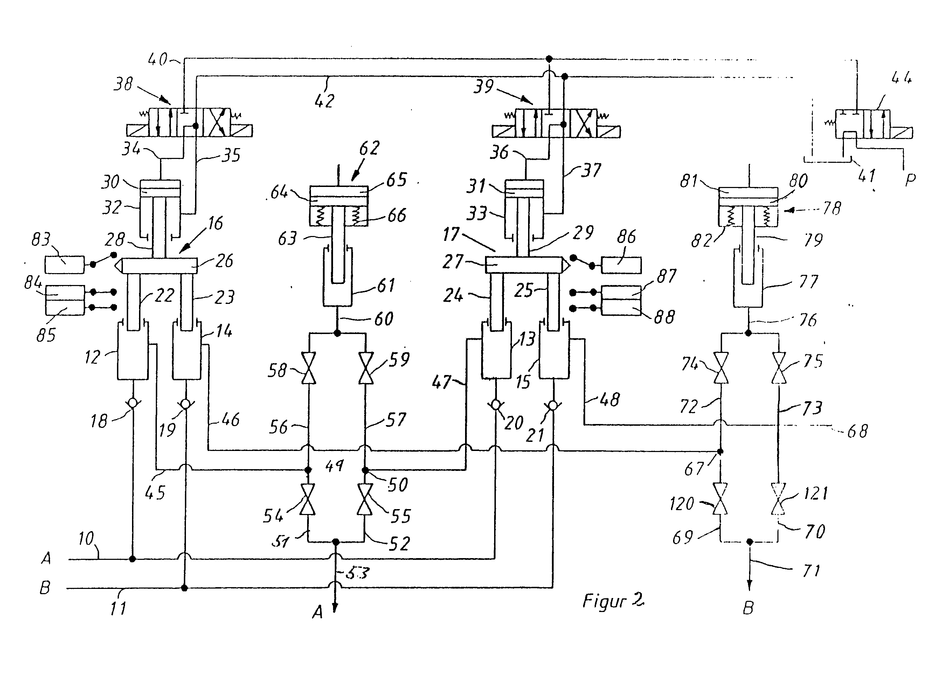

Das vorstehend beschriebene Ausführungsbeispiel einer erfindungsgemäßen Vorrichtung eignet sich insbesondere für Drücke bis etwa 10 bar in den Auspreßleitungen, da für derartige Drücke billige und einfach handzuhabende Pumpen zur Verfügung stehen. Für höhere Anlagendrücke, d. h. für Anlagen bis zu einigen 100 bar eignet sich insbesondere das in Verbindung mit Fig. 2 beschriebene Ausführungsbeispiel.

In Fig. 2 sind gleiche Elemente wiein Fig. 1 mit den selben Bezugzeichen bezeichnet. Auf eine nochmalige Erläuterung wird deshalb verzichtet. Im folgenden werden nur die Teile beschrieben, die neu hinzugekommen sind und die erfindungsgemäß vorgesehene Druckangleicheinheit für hohe Anlagendrücke bilden :

Von Abzweigepunkten 49, 50 führen jeweils Druckleitungen 56, 57 mit automatisch betätigbaren Absperrventilen 58, 59 über eine gemeinsame Leitung 60 zu einem Druckerhöhungszylinder 61, der Bestandteil einer Druckerhöhungseinheit 62 ist. In dem Druckerhöhungszylinder 61 ist die Kolbenstange 63 eines Druckkolbens 64 nach Art eines Plungers geführt, der in einem Druckzylinder 65 verschiebbar gelagert und zylinderseitig mit Druckmittel, vorzugsweise Druckluft, entgegen der Wirkung einer Rückstellfeder 66 beaufschlagbar ist. Die Rückstellfeder 66 kann gegebenenfalls wegfallen, da der Materialdruck für die Rückstellung des Druckkolbens 64 ausreicht.

Der Auspreßzylinder 14 der Auspreßeinheit 16 sowie der Auspreßzylinder 15 der Auspreßeinheit 17, die jeweils mit dem Härter B des Zweikomponenten-Kunststoffes gefüllt werden können, stehen über die Auspreßleitungen 46 und 48 über Abzweigpunkte 67, 68 und Auspreßleitungen 69, 70 mit einer gemeinsamen Abgabeleitung 71 für den Härter B in Verbindung. In die Auspreßleitungen 69, 70 sind automatisch betätigbare Absperrventile 120, 121 geschaltet.

Von den Abzweigepunkten 67, 68 führen jeweils Druckleitungen 72, 73, in die automatisch betätigbare Absperrventile 74 bzw. 75 geschaltet sind, über eine gemeinsame Druckleitung 76 zu einem Druckerhöhungszylinder 77 einer Druckerhöhungseinheit 78. In den Druckerhöhungszylinder 77 taucht die Kolbenstange 79 eines Druckkolbens 80 plungeratig ein, der in einem Druckzylinder 81 verschiebbar gelagert ist. Der Druckkolben 80 ist zylinderseitig in nicht näher dargestellter Weise von einem Druckmittel, vorzugsweise Druckluft, entgegen der Wirkung einer Rückstellfeder 82 beaufschlagbar. Die Rückstellfeder 82 kann gegebenenfalls auch weggelassen werden, da der Materialdruck für die Rückstellung des Druckkolbens 80 ausreicht.

Die Wirkungsweise der beschriebenen Vorrichtung ist wie folgt :

Die Inbetriebnahme der Vorrichtung erfolgt in gleicher Weise wie die Inbetriebnahme der Vorrichtung gemäß Fig. 1.

Beim Füllen der genannten Auspreßzylinder sind die automatischen Absperrventile 59 und 75 gleichzeitig geöffnet. Infolgedessen strömt die Basiskomponente A beim Füllen des Auspreßzylinders 13 in die Leitung 47, 57 und 60 sowie in den Druckerhöhungszylinder 61, dessen Kolbenstange 63 sich in der oberen Ausgangsstellung bei druckentlastetem Druckzylinder 65 befindet.

Gleichzeitig steht der Auspreßzylinder 15 über die Auspreßleitung 48 und die Druckleitung 73 mit geöffnetem Ventil 75 und die Druckleitung 76 mit dem Druckerhöhungszylinder 77 in Verbindung, der mit dem Härter B gefüllt wird. Die Kolbenstange 79 nimmt ebenfalls die obere Ausgangsstellung bei druckentlastetem Druckzylinder 81 ein.

Anschließend wird das elektromagnetische Mehrwegeventil 38 umgeschaltet, so daß die Druckleitung 40 über die Leitung 34 mit der Zylinderseite des Druckmittelzylinders 32 verbunden und dessen Kolben 30 im Auspreßsinne der Auspreßkolben 22, 23 in Fig. 2 nach unten bewegt wird. Gleichzeitig mit der Umschaltung des Mehrwegeventils 38 werden die automatischen Ventile 54 und 120 geöffnet, so daß die Basiskomponente A aus dem Auspreßzylinder 12 über die Leitung 45, 51 in die Abgabeleitung 53 strömen kann. Zur selben Zeit drückt der Auspreßkolben 23 aus dem Auspreßzylinder 14 den Härter B durch die Leitungen 46 und 69 in die Abgabeleitung 71. Die Abgabeleitungen 53 und 71 führen zu der Mischvorrichtung, von der aus der Zweikomponenten-Kunststoff einer Abgabevorrichtung, z. B. einer Düse oder Sprühvorrichtung zugeführt wird.

Während des Auspreßvorgangs der Auspreßeinheit 16 wird von dem Auspreßbalken 27 der Auspreßeinheit 17 der obere Endschalter 86 angefahren, sobald die zugehörigen Auspreßzylinder 13 und 15 mit den Stoffkomponenten A und B gefüllt sind. Durch die Betätigung des oberen Endschalters 86 werden die Druckerhöhungszylinder 61 und 77 mit Druckmittel, vorzugsweise Druckluft, entgegen der Wirkung der Rückstellfedern 66, 82 beaufschlagt. Infolgedessen werden die in den Druckerhöhungszylindern 61 bzw. 77 enthaltenen Stoffkomponenten A bzw. B in das System mit einem solchen Druck hineingepreßt, daß der Druck in der Auspreßeinheit 17 dem Druck des aus der Auspreßeinheit 16 strömenden Materials angeglichen wird, ehe die Auspreßeinheit 17 im Auspreßsinne betätigt wird.

Bei der weiteren Fortsetzung des Arbeitshubes der Auspreßkolben 22, 23 der Auspreßeinheit 16 fährt der zugehörige Auspreßbalken 26 den Endschalter 84 an. Hierdurch werden die automatischen Absperrventile 55 in der Leitung 52 sowie 121 in der Leitung 70 geöffnet. Etwa gleichzeitig wird das Mehrwegeventil 39 mit Druck beaufschlagt, so daß die Druckleitung 40 über die Leitung 36 die Zylinderseite des Druckmittelzylinders 33 mit Druck beaufschlagt und den Kolben 31 zusammen mit dem Auspreßbalken 27 und den Auspreßkolben 24, 25 abwärts treibt. Dadurch kann die Basiskomponente A aus dem Auspreßzylinder 13 durch die Leitung 47 und 52 in die Abgabeleitung 53 für die Basiskomponente A ausgepreßt werden, während der Härter B aus dem Auspreßzylinder 15 durch die Leitungen 48 und 70 in die Abgabeleitung 71 für den Härter B gepreßt wird.

Nach Ablauf einer einstellbaren Zeit schließen die automatischen Absperrventile 59 und 75 in den Leitungen 57 bzw. 73, so daß die Stoffkomponenten A und B ausschließlich in die Abgabeleitungen 53 und 71 fließen.

Bei der weiteren Fortsetzung des Auspreßhubes der Auspreßeinheit 16 fährt deren Auspreßbalken 26 den Endschalter 85 an, der das Schließen der automatischen Absperrventile 54 und 120 in den Leitungen 51 bzw. 69 bewirkt.

Nach Ablauf einer einstellbaren Zeit werden die Druckerhöhungszylinder 61 und 77 entlüftet. Die Auspreßeinheit 16 wird durch Betätigung des Mehrwegeventils 38 abgeschaltet.

Nach dem Abschalten der Auspreßeinheit 16 werden die automatischen Absperrventile 58 in der Leitung 56 sowie 74 in der Leitung 72 geöffnet, so daß die Zuführpumpen über die Leitungen 10 und 11 die Auspreßzylinder 12 und 14 der Auspreßeinheit 16 mit den Komponenten A bzw. B wieder füllen können. Dabei strömt die Komponente A über die Leitungen 45 und 56 in den Druckerhöhungszylinder 61 bzw. die Stoffkomponente B über die Leitungen 46 und 72 in den Druckerhöhungszylinder 77.

Während des Auspreßvorgangs der Auspreßeinheit 17 werden die Auspreßzylinder 12 und 14 der Auspreßeinheiten 16, wie erwähnt, mit den Komponenten A und B gefüllt, bis bei vollständiger Füllung der Auspreßzylinder 12 und 14, also in der oberen Totpunktstellung der Auspreßkolben 22, 23 der Auspreßbalken 26 den oberen Endschalter 83 anfährt. Durch diesen Endschalter 83 werden die Druckzylinder 65 und 81 der Drucklufterhöhungseinheiten 62, 78 mit Druckluft beaufschlagt. Dadurch wird der Materialdruck in der Auspreßeinheit 16 dem Druck des aus der Aus- preßeinheit 17 ausströmenden Materials angeg- lichen.

Beim weiteren Auspreßvorgang der Auspreßeinheit 17 betätigt deren Auspreßbalken 27 den zweiten Endschalter 87, durch den die automatischen Absperrventile 54 und 120 geöffnet werden. Durch ein gleichzeitiges Umschalten des Mehrwegeventils 38 beginnt die Auspreßeinheit 16 mit dem Auspressen.

Nach Ablauf einer einstellbaren Zeit schließen die automatischen Absperrventile 58 und 74 in den Leitungen 56 und 72.

Am Ende des Auspreßhubes der Auspreßeinheit 17 fährt deren Auspreßbalken 27 den dritten zugehörigen Endschalter 88 an, durch den die automatischen Absperrventile 55 und 121 in den Leitungen 52 und 70 geschlossen werden.

Nach dem Ablauf einer weiteren einstellbaren Zeit wird die Druckbeaufschlagung der Druckzylinder 65 und 81 abgeschaltet. Gleichzeitig wird das Mehrwegeventil 39 umgeschaltet, so daß die Auspreßeinheit 17 druckentlastet wird.

Nach dem Abschalten der Auspreßeinheit 17 werden die automatischen Absperrventile 59 und 75 in den Leitungen 57 bzw. 73 geöffnet. Die Zuführpumpen beaufschlagen über die Zuführleitungen 10 und 11 die Auspreßzylinder 13 bzw. 15 mit den Komponenten A bzw. B, um diese vollständig zu füllen.

Das Materialsystem steht nunmehr wieder erneut unter dem Druck der Auspreßeinheit 16.

An dieser Stelle wiederholt sich der Arbeitszyklus wie oben beschrieben.

Bezüglich der konstruktiven Ausgestaltung der Vorrichtung lassen die Fig. 1 und 2 bereits eine mögliche Ausführungsform erkennen, bei der die Auspreßkolben 22, 23 bzw. 24, 25 der beiden Auspreßeinheiten 16 und 17 an einem feststehenden horizontalen Auspreßbalken 26 bzw. 27 befestigt sind der mit dem Ende der Kolbenstange des Kolbens 30 bzw. 31 fest verbunden ist. Durch die Wahl unterschiedlicher Abmessungen der Auspreßzylinder und ihrer Kolben kann das Mischungsverhältnis der Komponenten A und B ungeachtet der gleichen Hublänge der Auspreßkolben 22, 23 verändert werden.

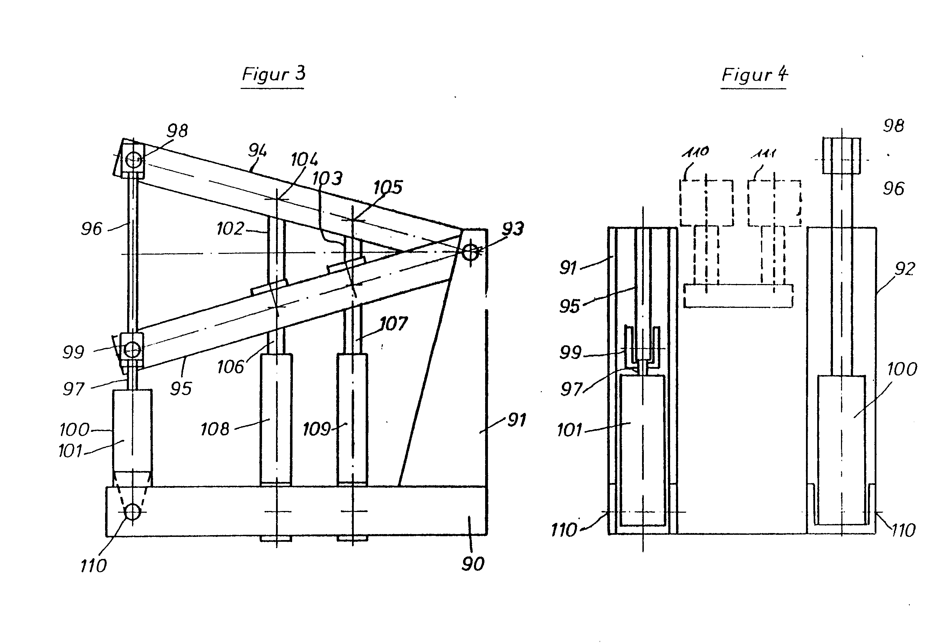

Eine weitere Ausführungsform der Einrichtung geht aus den Fig. 3 und 4 hervor. Von einem Grundrahmen 90 erheben sich an dessen Rückseite zwei Konsolen 91, 92. Diese Konsolen tragen im Bereich ihrer oberen Enden eine horizontale Achse 93, um die zwei Hebel 94, 95 schwenkbar sind. Die freien Enden der beiden Hebel 94, 95 sind jeweils an das obere Ende einer Kolbenstange 96 bzw. 97 an Anlenkpunkten 98, 99 angelenkt, deren Kolben in Druckzylinder 100, 101 wechselweise mit Druckmittel beaufschlagbar sind, so daß, wie Fig. 3 zeigt, die Hebel 94, 95 abwechselnd die obere und untere Stellung einnehmen.

An den Hebel 94 sind darüberhinaus jeweils die Enden von Kolbenstangen 102, 103 bei 104 bzw. 105 angelenkt, die plungerartig in nicht sichtbare Auspreßzylinder für die Komponente A bzw. B eines Zweikomponenten-Kunststoffes eintauchen.

In gleicher Weise ist der Hebel 95 mit dem Auspreßkolben 106, 107 von zwei Auspreßzylindern 108, 109 gelenkig verbunden. Die Auspreßzylinder sind mit dem Grundrahmen 90 fest, aber lösbar verbunden.

Bei dieser Ausführungsform besteht die Möglichkeit, den Hubweg der Kolbenstangen 102, 103 bzw. Auspreßkolben 106, 107 dadurch zu verändern, daß die Anlenkpunkte der Auspreßkolbenenden an den Hebeln 94 bzw. 95 verändert werden. Dies kann dadurch geschehen, daß beide Hebel 94, 95 mit Längsschlitzen versehen sind, in denen Steine geführt sind, an denen die Auspreßkolben- nenden schwenkbar angreifen. Durch Längsver- schiebung der Anlenksteine für die Kolbenenden in den Längsschlitzen der Hebel 94, 95 kann somit die Hublänge der Auspreßkolben verändert werden. Dies setzt natürlich voraus, daß auch die Auspreßzylinder, z. B. 108, 109 am Grundrahmen 90 entsprechend versetzt werden können. Daneben kann aber das Mischungsverhältnis der Komponenten A und B, wie bei der Ausführungsform gemäß Fig. 1 oder 2 natürlich auch durch die Auswahl unterschiedlicher Größen der Auspreßzylinder und Auspreßkolben variiert werden.

Die Druckzylinder 100, 101 sind, am Grundrahmen 90 bei 110 angelenkt und werden hydraulisch oder pneumatisch abwechselnd im gleichen Sinn betätigt wie die Auspreßbalken 26, 27 in Fig. 1 bzw. 2.

Anstelle der Hebel 94, 95 sind auch Ausführungen mit Doppelhebeln möglich, bei denen die Hebelseiten die Auspreßkolben von Auspreßzylindern ermöglichen. Es ist selbstverständlich, daß mit den beschriebenen Vorrichtungen auch aus mehr als zwei Komponenten bestehende Materialmischungen verarbeitet bzw. dosiert werden können, da die Zahl der Auspreßzylinder jeder Auspreßeinheit sowie die Zahl der Druckerhöhungseinrichtungen lediglich der Zahl der Mischungskomponenten angepaßt zu werden braucht. Infolgedessen ist auch die Dosierung von Einkomponenten-Kunststoffen mit den beschriebenen Einrichtungen möglich. Für diesen Fall würden in Fig. 1 z. B. nur die Auspreßzylinder 12 und 13 benötigt werden, wenn das Material durch die Zuführleitung 10 zugeführt wird.

## Patentansprüche

1. Verfahren zum Dosieren von mindestens einem viskosen Stoff und insbesondere von Zweikomponenten-Kunststoffen, bei dem der jeweilige Stoff mit Hilfe von zwei an mindestens eine Zuführpumpe angeschlossenen Auspreßeinheiten einer Abgabevorrichtung zugeführt wird, gekennzeichnet durch eine Überlagerung des Endes eines Auspreßvorgangs jeweils einer der beiden Auspreßeinheiten durch den Auspreßvorgang der jeweils anderen Auspreßeinheit, wobei der Druck der jeweils andern Auspreßeinheit dem Druck in der einen der beiden Auspreßeinheiten angeglichen wird.

2. Vorrichtung zur Durchführung des Verfahrens nach Anspruch 1 mit zwei Auspreßeinheiten (16, 17) für mindestens einen viskosen Stoff, die über mit Rückschlagventilen (18, 19, 20, 21) ausgerüstete Zuführleitungen (10, 11) mit einer Zuführpumpe für den jeweiligen viskosen Stoff sowie über mit Ventilen (54, 120, 55, 121) ausgerüstete Auspreßleitungen (45, 46, 47, 48) an eine Abgabevorrichtung angeschlossen sind, dadurch gekennzeichnet, daß eine Druckangleicheinheit den Druck in den beiden Auspreßeinheiten (16, 17) angleicht und das Ende des Auspreßvorgangs der einen Auspreßeinheit (16 bzw. 17) durch den Auspreßvorgang der jeweils anderen Auspreßeinheit (17 bzw. 16) überlagert.

3. Vorrichtung nach Anspruch 2, dadurch gekennzeichnet, daß die Druckangleicheinheit den Förderdruck der Zuführpumpe derart steuert, daß der mittlere Druck in den Zuführleitungen (10, 11) in etwa dem mittleren Druck in den Auspreßleitungen (45, 46, 47, 48) entspricht.

4. Vorrichtung nach Anspruch 2, dadurch gekennzeichnet, daß die Druckangleicheinheit Überdruckventile in den Auspreßeinheiten (16, 17) aufweist, die bei gleichen Drücken öffnen.

5. Vorrichtung nach einem der Ansprüche 2 bis 4, dadurch gekennzeichnet, daß in einer Arbeitshubstellung des Auspreßkolbens (22, 23 ; 24, 25) jeweils einer der Auspreßeinheiten (16, 17) ein Endschalter (84 ; 87) anfahrbar ist, der das Öffnen eines in die Auspreßleitung (45, 46 ; 47, 48) der jeweils anderen Auspreßeinheit (16 ; 17) geschalteten Ventils (54, 120 ; 55, 121) sowie die gleichzeitige Betätigung dieser anderen Auspreßeinheit im Auspressinne bewirkt.

6. Vorrichtung nach einem der Ansprüche 2 bis 5 dadurch gekennzeichnet, daß ein weiterer Endschalter (85, 88) am Ende des Auspreßhubes von dem Auspreßkolben (22, 23 ; 24, 25) der zugehörigen Auspreßeinheit (16, 17) derart betätigbar ist, daß er ein in die Auspreßleitung (45, 51 ; 46, 69 ; 47, 52 ; 48, 70) der betreffenden Auspreßeinheit (16 ; 17) geschaltetes Ventil (54, 120 ; 55, 121) schließt.

7. Vorrichtung nach Anspruch 2, dadurch gekennzeichnet, daß die Druckangleicheinheit mindestens eine Druckerhöhungseinheit (62, 78) aufweist, mit der die Auspreßleitungen (45, 46, 47, 48) der beiden Auspreßeinheiten (16, 17) zusätzlich über je eine Abzweigleitung (56, 57, 72, 73) verbunden sind, daß sowohl in die Druckleitungen (56, 57, 72, 73) als auch in die Auspreßleitungen (51, 52, 69, 70) Ventile (58, 59, 74, 75, 54, 55, 120, 121) geschaltet sind, die in Abhängigkeit von der Hubstellung der Auspreßkolben (22, 23, 24, 25) in den Auspreßeinheiten (16, 17) derart steuerbar sind, daß während des Auspreßvorgangs einer der beiden Auspreßeinheiten (16, 17) und nach dem Füllen der anderen Auspreßeinheit (16, 17) die Druckerhöhungseinheit (62, 78) mit Druckmitteldruck im Sinne einer Angleichung des Materialdrucks in der anderen Auspreßeinheit an den Druck des aus der ersten Auspreßeinheit strömenden Materials beaufschlagbar ist und anschließend die andere Auspreßeinheit zur ersten Auspreßeinheit zuschaltbar ist.

8. Vorrichtung nach Anspruch 7, dadurch gekennzeichnet, daß jeder Auspreßeinheit (16, 17) drei Endschalter (83, 84, 85, 86, 87, 88) zugeordnet sind, von denen ein Endschalter (83, 86) nach vollständiger Füllung der zugeordneten Auspreßeinheit (16, 17) anfahrbar ist, wodurch die Druckmittelbeaufschlagung der Druckerhöhungseinheit (62, 78) zugeschaltet wird.

9. Vorrichtung nach den Ansprüchen 7 oder 8, dadurch gekennzeichnet, daß in einer Arbeitshubstellung der Auspreßkolbens (22, 23, 24, 25) jeweils einer der Auspreßeinheiten (16, 17) ein zweiter Endschalter (84, 87) anfahrbar ist, der das Öffnen eines in die Auspreßleitung (45, 46, 47, 48) der jeweils anderen Auspreßeinheit (16, 17) geschalteten Ventils (54, 120, 55, 121) sowie die gleichzeitige Betätigung dieser anderen Auspreßeinheit im Auspreßsinne bewirkt.

10. Vorrichtung nach einem der Ansprüche 7 bis 9, dadurch gekennzeichnet, daß in die von den Auspreßeinheiten (16, 17) zu der Druckerhöhungseinheit (62, 78) führenden Auspreßleitungen (45, 56, 46, 72, 47, 57, 48, 73) geschaltete Ventile (58, 74, 59, 75) zeitabhängig derart steuerbar sind, daß dasjenige Ventil schließt, welches in die von der nachträglich zugeschalteten Auspreßeinheit (16, 17) zur Druckerhöhungseinheit (62, 78) führende Leitung (56, 57, 72, 73) geschaltet ist.

11. Vorrichtung nach einem der Ansprüche 7 bis 10, dadurch gekennzeichnet, daß der dritte Endschalter (85, 88) am Ende des Auspreßhubes von dem Auspreßkolben (22, 23, 24, 25) der zugehörigen Auspreßeinheit (16, 17) im Schließsinn eines Ventils (54, 120, 55, 121) betätigbar ist, das in die Auspreßleitung (45, 51, 46, 65, 47, 52, 48, 70) der betreffenden Auspreßeinheit (16, 17) geschaltet ist.

12. Vorrichtung nach einem der Ansprüche 7 bis 11, dadurch gekennzeichnet, daß die Druckbeaufschlagung der Druckerhöhungseinheit (62, 78) sowie die Abschaltung jeweils einer der beiden Auspreßeinheiten (16, 17) nach Beendigung des

Auspreßvorgangs zeitabhängig steuerbar sind, bevor das die entleerte Auspreßeinheit (16, 17) mit der Druckerhöhungseinheit (62, 78) verbindende Ventil (58, 74, 59, 75) geöffnet und die entleerte Auspreßeinheit (16, 17) wieder mit viskosem Stoff gefüllt werden.

13. Vorrichtung nach einem der Ansprüche 7 bis 12, dadurch gekennzeichnet, daß die Auspreßeinheiten (16, 17) jeweils aus zwei Auspreßzylindern (12, 14, 13, 15) für je eine Stoffkomponente (A, B) bestehen, deren Auspreßkolben (22, 23, 24, 25) über einen Auspreßbalken (26, 27) mit einer Betätigungsvorrichtung (28, 30, 32, 29, 31, 33) gekoppelt sind, wobei die Auspreßzylinder (12, 14, 13, 15) über je eine mit einem Ventil (58, 74, 59, 75) ausgerüstete Leitung (45, 56, 46, 72, 47, 57, 48, 73) mit je einer Druckerhöhungseinheit (62, 78) für je eine der beiden Stoffkomponente (A, B) verbunden sind, von denen jede über je zwei mit Ventilen (54, 55, 120, 121) versehende Auspreßleitung (51, 52, 69, 70), die mit je einer Auspreßeinheit (16, 17) verbunden sind, an eine Abgabeleitung (53, 71) für eine der Stoffkomponenten (A, B) angeschlossen ist.

14. Vorrichtung nach einem der Ansprüche 3 bis 6, dadurch gekennzeichnet, daß die Auspreßeinheiten (16 ; 17) jeweils aus zwei Auspreßzylindern (12, 14 ; 13, 15) für je eine Stoffkomponente (A, B) bestehen, deren Auspreßkolben (22, 23 ; 24, 25) über einen Auspreßbalken (26 ; 27) mit einer Betätigungsvorrichtung (28, 30, 32 ; 29, 31, 33) gekoppelt sind, wobei das Mischungsverhältnis der Komponenten durch einen abweichenden Durchmesser der Auspreßzylinder (12 ; 13) und der zugehörigen Auspreßkolben (22 ; 24) für die Komponenten A in Bezug auf den Durchmesser der Auspreßzylinder (14 ; 15) und der zugehörigen Auspreßkolben (23 ; 25) für die Komponente B oder durch einen unterschiedlichen Hub des Auspreßkolbens (22 ; 24) für die Komponente A verglichen mit dem Hub des Auspreßkolbens (23 ; 25) für die Komponente B oder durch die gleichzeitige Anwendung beider genannten Konstruktionsmerkmale einstellbar ist.

## Claims

1. Method of metering at least one viscous material, and in particular bi-component plastic materials, wherein the respective material is supplied by two squeezer units of a discharge device, which are connected to at least one feeding pump, characterised by overlapping the end of one squeezing cycle of one of said two squeezer units by the squeezing cycle of the respectively other squeezer unit, the pressure of the respectively other squeezer unit being adapted to the pressure in said first of said two squeezer units.

2. Device for carrying through the method according to Claim 1, comprising two squeezer units (16, 17) for at least one viscous material, which are connected to a feeder pump for the respective viscous material through feeder lines (10, 11) provided with non-return valves (18, 19, 20, 21), and to a discharge device through squeeze lines (45, 46, 47, 48) provided with valves, characterized in that a pressure adapter unit assimilates the pressure in said two squeezer units (16, 17) and overlaps the end of the squeezing cycle of said first squeezer unit (16 or 17) by the squeezing cycle of the respectively other squeezer unit (17 or 16).

3. Device according to Claim 2, characterized in that the pressure adapter unit controls the delivery pressure of said feeder pump in a way that the mean pressure in the feeder lines (10, 11) approximately corresponds to the mean pressure in the squeeze lines (45, 46, 47, 48).

4. Device according to Claim 2, characterized in that the pressure adapter unit comprises pressure relief valves in the squeezer units (16, 17) which open at the same pressure levels.

5. Device according to any of Claims 2 to 4, characterized in that with a defined position along the travel of the squeezing piston (22, 23 ; 24, 25) of one of said squeezer units (16, 17) a limit switch (84 ; 87) can be controlled which causes a valve (54, 120 ; 55, 121) provided in the squeeze line (45, 46 ; 47, 48) of the respectively other squeezer unit (16 ; 17) to open whilst it causes the simultaneous actuation of said other squeezer unit in the squeezing sense.

6. Device according to any of Claims 2 through 5, characterized in that another limit switch (85 ; 88) is provided for being operated, at the end of the squeezing cycle, by the squeezing piston (22, 23 ; 24, 25) of the associated squeezer unit (16, 17) in a way that it closes a valve (54, 120 ; 55, 121) inserted into the squeeze line (45, 51 ; 46, 69 ; 47, 52 ; 48, 70) of the respective squeezer unit (16 ; 17).

7. Device according to Claim 2, characterized in that the pressure adapter unit includes at least one pressure intensifier unit (62, 78) which additionally connects the squeeze lines (45, 46, 47, 48) of the two squeezer units (16, 17) through a respective branch-off line (56, 57, 72, 73), that both in the pressure lines (56, 57, 72, 73) and in the squeeze lines (51, 52, 69, 70) valves (58, 59, 74, 75, 54, 55, 120, 121) are inserted which, as a function of the stroke position of the squeezing pistons (22, 23, 24, 25) in said squeezer units (16, 17), can be controlled to the effect that during the squeezing operation of one of said squeezer units (16, 17) and after charging the other squeezer unit (16, 17), the pressure intensifier unit (62, 78) can be pressurized with the pressure of a pressure medium so as to adapt the material pressure in the other squeezer unit to the pressure of the material flowing out of said first squeezer unit, and that finally the other squeezer unit can be connected to said first squeezer unit.

8. Device according to Claim 7, characterized in that three limit switches (83, 84, 85, 86, 87, 88) are associated with each squeezer unit (16, 17), whereof one limit switch (83, 86) can be controlled upon the complete filling of the associated squeezer unit (16, 17) so as to connect the means pressurizing with the pressure medium of said pressure intensifier unit (62, 78).

9. Device according to Claim 7 or 8, characterized in that with a defined travel position of the squeezing pressure (22, 23, 24, 25) in one of said squeezer units (16, 17) a second limit switch (84, 87) can be controlled which causes a valve (54, 120, 55, 121) provided in the squeeze line (45, 46, 47, 48) of the respectively other squeezer unit (16, 17) to open while causing the simultaneous actuation of said other squeezer unit in the squeezing sense.

10. Device according to any of Claims 7 through 9, characterized in that the valves (58, 74, 59, 75) provided in the squeeze lines (45, 56, 46, 72, 47, 57, 48, 73) leading to said pressure intensifier unit (62, 78) can be controlled, as a function of time, so as to cause that valve to close which is provided in the line (56, 57, 72, 73) leading from the subsequently connected squeezer unit (16, 17) to said pressure intensifier unit (62, 78).

11. Device according to any of Claims 7 through 10, characterized in that the third limit switch (85, 88) can be operated, at the end of the squeezing cycle, by the squeezing piston (22, 23, 24, 25) of the associated squeezing unit (16, 17) in the closing sense of a valve (54, 120, 55, 121) which is provided in the squeeze line (45, 51, 46, 65, 47, 52, 48, 70) of the respective squeezer unit (16, 17).

12. Device according to any of Claims 7 through 11, characterized in that the pressurization of the pressure intensifier unit (62, 78) as well as the deactivation of one of said squeezer unit (16, 17), respectively, can be controlled, at the end of the squeezing operation, as a function of time, before the valve (58, 74, 59, 75) connecting the discharged squeezer unit (16, 17) to said pressure intensifier unit (62, 78) opens while the discharged squeezer wit (16, 17) is charged again with said viscous material.

13. Device according to any of Claims 7 through 12, characterized in that each of said squeezer units (16, 17) comprises two squeezing cylinders (12, 14, 13, 15) for one of the material components (A, B), whose squeezing pistons (22, 23, 24, 25) are connected, through a squeezer bar (26, 27), to an actuator means (28, 30, 32, 29, 31, 33), said squeezing cylinders (12, 14, 13, 15) being connected each to one pressure intensifier unit (62, 78) for each of said two material components (A, B), through a line (45, 56, 46, 72, 47, 57, 48, 73) provided with a valve (58, 74, 59, 75), each of said pressure intensifier units being connected to a discharge line (53, 71) for one of said material components (A, B) through respectively two squeeze lines (51, 52, 69, 70) provided with valves (54, 55, 120, 121) and connected to one of said squeezer units (16, 17).

14. Device according to any of Claims 3 through 6, characterized in that each of said squeezer units (16 ; 17) comprises two squeezing cylinders (12, 14 ; 13, 15) for one of said material components (A, B), respectively, whose squeezing pistons (22, 23 ; 24, 25) are linked up with an actuator means (28, 30, 32 ; 29, 31, 33) through a squeezer bar (26 ; 27), and that the mixing proportion of the components can be set by a variation of the diameter of the squeezing cylinders (12 ; 13) and the associated squeezing pistons (22 ; 24) for said first component (A) and of the associated squeezing piston (23 ; 25) for said second component (B), or by a variation of the travel of the squeezing piston (22 ; 24) for said first component (A), relative to the travel of the squeezing piston (23 ; 25) for said second component (B), or by the simultaneous application of the two aforedescribed structural measures.

**Revendications**

1. Procédé de dosage d'au moins une matière visqueuse, notamment des matières synthétiques à deux composants, dans lequel la matière respective est amenée à un dispositif distributeur au moyen de deux unités de pression raccordées à au moins une pompe d'alimentation, caractérisé par l'entrelacement de la fin d'un cycle de pression, d'une des deux unités de pression avec le cycle de pression de la respectivement autre unité de pression, la pression de la respectivement autre unité de pression étant égalisée au niveau de la pression dans la première des deux unités de pression.

2. Dispositif pour l'exécution du procédé selon la Revendication 1, comprenant deux unités de pression (16, 17) pour au moins une matière visqueuse, raccordées, d'une part, à une pompe d'alimentation de la matière visqueuse respective par des conduites d'alimentation (10, 11) pourvues des soupapes de non-retour (18, 19, 20, 21), et, de l'autre part, à un dispositif distributeur par des conduites de pression (45, 46, 47, 48) pourvues des soupapes (54, 120, 55, 121), caractérisé en ce qu'un égalisateur de pression égalise la pression dans les deux unités de pression (16, 17) et entrelace la fin du cycle de pression de la première des deux unités de pression (16 ou 17) avec le cycle de pression de la respectivement autre unité de pression (17 ou 16).

3. Dispositif selon la Revendication 2, caractérisé en ce que l'égalisateur règle la pression de refoulement de la pompe d'alimentation d'une façon que la pression moyenne dans les conduites d'alimentation (10, 11) corresponde environ à la pression moyenne dans les conduites de pression (45, 46, 47, 48).

4. Dispositif selon la Revendication 2, caractérisé en ce que l'égalisateur comprend des soupapes de surpression dans les unités de pression (16, 17) qui s'ouvrent au même niveau de pression.

5. Dispositif selon quelconque des Revendications 2 à 4, caractérisé en ce qu'à un moment défini, à une position définie dans la course du piston de pression (22, 23 ; 24, 25) d'une des unités de pression (16, 17), un commutateur de fin de course (84 ; 87) se peut actionner afin de causer l'ouverture d'une soupape (54, 120 ; 55, 121) insérée dans la conduite de pression (45, 46 ; 47, 48) de la respectivement autre unité de pression (16 ; 17), et d'effectuer l'actionnement simultané de cette autre unité de pression pour l'expulsion.

6. Dispositif selon quelconque des Revendications 2 à 5, caractérisé en ce qu'à la fin du cycle de pression, le piston de pression (22, 23 ; 24, 25) de l'unité de pression associée (16, 17) peut actionner un autre commutateur de fin de course (85 ; 88) d'une façon qu'il ferme une soupape (54, 120 ; 55, 121) insérée dans la conduite de pression (45, 51 ; 46, 69 ; 47, 52 ; 48, 70) de l'unité de pression respective (16 ; 17).

7. Dispositif selon la Revendication 2, caractérisé en ce que l'égalisateur de pression comprend au moins une unité de surpression (62, 78) par laquelle les conduites de pression (45, 46 ; 47, 48) des deux unités de pression (16, 17) sont supplémentairement raccordées l'une à l'autre moyennant une conduite de branchement (56, 57, 72, 73), et qu'en plus des soupapes (58, 59, 74, 75, 54, 55, 120, 121) sont insérées dans les conduites de refoulement (56, 57, 72, 73) et de même dans les conduites de pression (51, 52, 69, 70) qui, en fonction de la position en course des pistons de pression (22, 23, 24, 25) dans les unités de pression (16, 17), sont réglables d'une façon qu'au cours du cycle de pression d'une des deux unités de pression (16, 17) et après le remplissage de l'autre unité de pression (16, 17), l'unité de surpression (62, 78) soit soumise à la pression du gaz ou fluide sous pression afin d'égaliser la pression de la matière dans l'autre unité de pression au niveau de la pression de la matière sortante de la première unité de pression, et en ce que ci-après l'autre unité de pression se peut raccorder à la première unité de pression.

8. Dispositif selon la Revendication 7, caractérisé en ce que trois commutateurs de fin de course (83, 84, 85, 86, 87, 88) sont associés à chaque unité de pression (16, 17), dont un commutateur (83, 86) est actionnable après le remplissage complet de l'unité de pression associée (16, 17), en raccordant le dispositif de mise sous pression de l'unité de surpression (62, 78).

9. Dispositif selon les Revendications 7 ou 8, caractérisé en ce qu'à une position définie sur la course des pistons de pression (22, 23, 24, 25) d'une des unités de pression (16, 17), un deuxième commutateur de fin de course (84, 87) est actionnable afin de causer l'ouverture d'une soupape (54, 120, 55, 121) insérée dans la conduite de pression (45, 46, 47, 48) de la respectivement autre unité de pression (16, 17) et l'actionnement simultané de cette autre unité de pression pour l'expulsion.

10. Dispositif selon quelconque des Revendications 7 à 9, caractérisé en ce que les soupapes (48, 74, 59, 75), qui sont insérées dans les conduites de pression (45, 56, 46, 72, 47, 57, 48, 73) passantes des unités de pression (16, 17) à l'unité de surpression (62, 78), sont contrôlables en fonction du temps d'une façon qu'elles causent la fermeture de la soupape qui est insérée dans la conduite (56, 57, 72, 73) qui passe de l'unité de pression (16, 17) raccordée ultérieurement à ladite unité de surpression (62, 78).

11. Dispositif selon quelconque des Revendications 7 à 10, caractérisé en ce que le troisième commutateur de fin de course (85, 88) est actionnable à la fin du cycle de pression par le piston de pression (22, 23, 24, 25) de l'unité de pression (16, 17) associée afin de causer la fermeture d'une soupape (54, 120, 55, 121) qui est insérée dans la conduite de pression (45, 51, 46, 65, 47, 52, 48, 70) de l'unité de pression respective (16, 17).

12. Dispositif selon quelconque des Revendications 7 à 11, caractérisé en ce que la soumission à pression de l'unité de surpression (62, 78) ainsi que la mise hors service de respectivement une des deux unités de pression (16, 17) après la fin du cycle de pression sont commandables en fonction du temps avant que la soupape (58, 74, 59, 75) par laquelle l'unité de pression vidée (16, 17) se raccorde à l'unité de surpression (62, 78) s'ouvre et avant que l'unité de pression vidée (16, 17) soit remplie encore de la matière visqueuse.

13. Dispositif selon quelconque des Revendications 7 à 12, caractérisé en ce que chacune des deux unités de pression (16, 17) est constituée de deux cylindres de pression (12, 14, 13, 15) pour chacun des deux composants de la matière (A, B), dont les pistons de pression (22, 23, 24, 25) sont couplés, par une barre de pression (26, 27), à un dispositif d'actionnement (28, 30, 32, 29, 31, 33), lesdits pistons de pression (12, 14, 13, 15) étant raccordés à une unité de surpression respective (62, 78) pour un des deux composants (A, B) respectivement par une conduite (45, 56, 46, 72, 47, 57, 48, 73) pourvue d'une soupape (58, 74, 59, 75), pendant que chaque unité de surpression est raccordée à une conduite de distribution (53, 71) d'un des deux composants (A, B) respectivement par une conduite de pression (51, 52, 69, 70) pourvue de deux soupapes (54, 55, 120, 121) et reliée à une desdites unités de pression (16, 17).

14. Dispositif selon quelconque des Revendications 3 à 6, caractérisé en ce que chacune des deux unités de pression (16 ; 17) est constituée de deux cylindres de pression (12, 14 ; 13, 15) respectivement pour un composant (A, B), dont les pistons de pression (22, 23 ; 24, 25) sont couplés à un dispositif d'actionnement (28, 30, 32 ; 29, 31, 33) par une barre de pression (26 ; 27), le rapport de mélange des composants étant réglable par une variation du diamètre des cylindres de pression (12 ; 13) et des pistons de pression associés (22 ; 24) pour les composants A, relativement au diamètre des cylindres de pression (14 ; 15), et de même des pistons de pression associés (23 ; 25) pour le composant B, ou par une variation de la course du piston de pression (22 ; 24) pour le composant A, relativement à la course du piston de pression (23 ; 25) pour le composant B, ou par l'emploi simultané desdites deux mesures de construction.

Figur 1

Figur 2

Figur 3

Figur 4

EP 0 141 930 B1